# EUROPEAN PATENT SPECIFICATION

(11) **EP 1 251 394 B1**
(45) Date of publication and mention of the grant of the patent: **26.09.2007**
(21) Application number: 01401013.6
(22) Date of filing: 20.04.2001
(51) Int. Cl.: G03B 35/24, G02B 27/22

(54) **Three dimensional photographic apparatus**
Dreidimensionales fotografisches Gerät
Appareil photographique tridimensionnel

(43) Date of publication of application: 23.10.2002
(73) Proprietor: Thomson Licensing, 92100 Boulogne-Billancourt (FR)
(72) Inventor: Chikazawa, Yoshiharu, 92648 Boulogne (FR)
(74) Representative: Ruellan-Lemonnier, Brigitte

(56) References cited:
- WO-A-01/20386
- US-A- 5 519 533
- US-A- 5 949 390

## Description

The invention relates to a three dimensional (3D) display of the integral photography (IP) type. It relates also to an image capturing apparatus of the IP type.

For the display of static or dynamic 3D images, only the holographic method and the integral photography method are such that, on one hand, the viewer does not need to wear glasses and, on the other hand, the position of the eyes with respect to the display is not critical in order to obtain a correct 3D image.

Compared to the holographic method, the integral photography has the advantage of a greater simplicity. Such method is described for example in US 5,949,390.

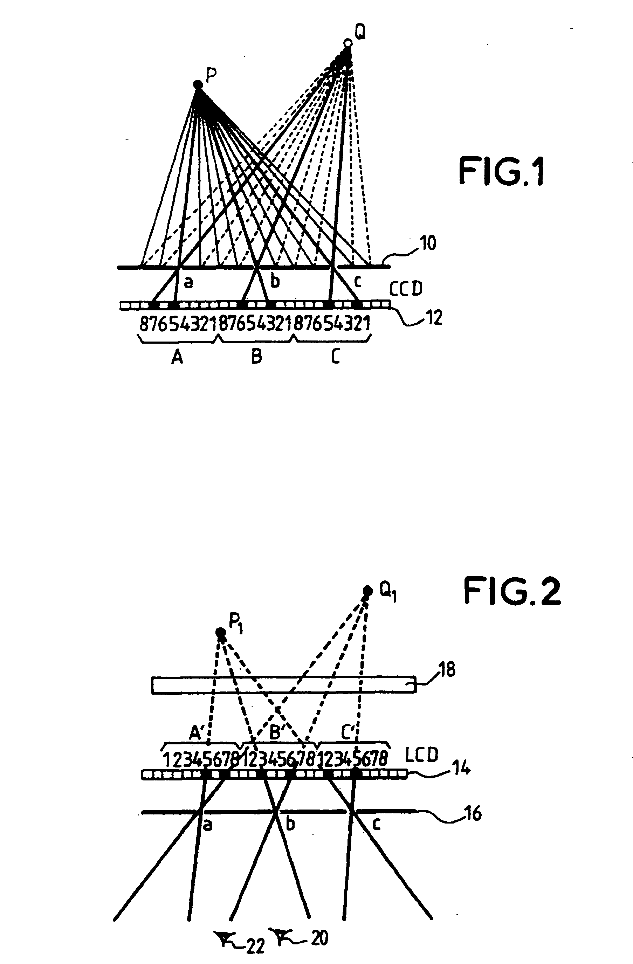

This known integral photography method will be explained herein after with reference to figure 1 and figure 2.

Figure 1 shows the principle of image capturing. The image capturing equipment comprises an array 10 of holes (or apertures) or lenses a, b, c ... At a given distance d of this array 10 is provided a set 12 of detectors A, B, C ... such as CCDs.

Each of those detectors has a predetermined number of detecting elements; this predetermined number is 8 in this simplified example. To each detecting element corresponds a pixel of a flat surface display (for example a liquid crystal display LCD) 14 of the image-reproducing device represented on figure 2. When a CCD detecting element receives light, the corresponding display pixel becomes transparent with a transmission coefficient which depends on the light intensity received by the CCD element.

In the example shown on figure 1 an object point P illuminates the detector elements A5, B3, C2 and the object point Q illuminates the detector elements A7, B6 and C5.

The correspondence between CCD elements and display pixels is such that to each CCD detector A, B, C ... corresponds a reproducing section A', B', C' and the order of the pixels in each reproducing section (A' for example) is inverted with respect to the order of the CCD elements in the corresponding (A) CCD detector. For example on figure 1 the CCD element A1 is on the right part of CCD detector A and, on figure 2, the corresponding pixel element A'1 is on the left part of this section.

The control of display 14 from signals provided by CCD 12, including the inversion, is realized by a processor not shown on figures 1 and 2.

The reproducing apparatus comprises an array 16 of holes or apertures, or lenses (passive array) corresponding to the array 10 of the image-capturing device. This array 16 is associated to the flat surface display 14 and to a light source 18 in such a way that light emitted by source 18 crosses the display 14 and, afterwards, the holes of array 16. If the array 16 is identical to the array 10 of the capturing device and if the inverted relative positions of pixel elements A'1, A'2, ..., B'1, B'2, ... are the same as the relative positions of CCD element, A1, A2, ... B1, B2, ... the distance d between array 16 and display 14 is equal to the distance between array 10 and CCD 12.

The light rays A'5-a, B'3-b, and C'2-c converge virtually to point P₁. The light rays A'7a, B'6b and C'5c converge virtually to point Q1. The respective positions of points P₁ and Q₁ are exactly the same as the respective positions of original points P and Q. In other words the integral photography 3D display provides a true 3D image of the original object if there is perfect correspondence between detecting elements and corresponding pixels of flat display, for example LCD 14.

The arrays 10 and 16 may be replaced by arrays of small lenses or equivalent means.

The drawback of the IP method is that the image has a limited resolution. This resolution depends on the number of pixels of each section A', B', C'of the display device and on the number of detectors on each sector for the image capturing device.

The invention provides a better resolution for IP capturing device and IP reproducing device without increasing the number of pixels.

In order to achieve this goal the image capturing device comprises, according to the invention, all the features of claim 8. In particular, controllable optical means are provided, in front of the passive array, for each subarray and the corresponding point of the passive array, these optical controllable means being controlled during n subframes dividing each image frame, the control being such that it divides the detected (or captured) angular space into n subangular spaces, each subangular space at the input of the optical controllable means providing an output covering the whole angular space delimited by all the points of the subarray and the corresponding point of the passive array.

For instance, if n=2 the detected space is divided into two subangular spaces, and during the first subframe all the detector elements of each subarray will be associated to the first subangular space and during the second subframe all the detector elements of each subarray will be associated to the second subangular space. Therefore each point in space will be represented by a number of light rays equal to two times the number of detector elements in a subarray, and the resolution may be multiplied by two.

Moreover the controllable optical element associated to each slit or lens may be also such that the total angular space is greater than the total angular space provided by a single controllable lens or slit.

The controllable element is a prism with a variable angle.

In that case, the number of subframes may be equal to three and the angle between the faces of the prism take three values, two of them having opposite values and the faces being parallel during the remaining subframe.

The subframes may have equal durations.

The optical controllable means may comprise an optical element which is common to all the subarrays, or an optical element individual to each subarray and to the corresponding point of the passive array.

It must be understood here that each point of the passive array is an aperture or slit of a plate, or a lens.

The invention concerns also a display device according to claim 1.

The controllable optical means may be one single optical element which is common for all the subarrays, or one controllable optical element may be provided for each subarray.

Preferably, the set of n angular spaces form an angular space which is wider than the angular space defined by the light rays from the point of the passive array and the corresponding set of points of each subarray.

In one embodiment, the subframes have equal durations.

The controllable optical means comprise a prism and means for varying the angle between the faces of said prism.

In that case the number of subframes may be equal to three and the angle between the faces of the prism take three values, two of them having opposite values and the faces being parallel during the remaining subframe.

The array representing the image to be displayed is for instance a flat surface display, such as a liquid crystal display.

The passive array is an aperture or slit of a plate, or a lens.

Other features and advantages of the invention will appear with the following description of certain of its embodiments, wherein :
figure 1, already described, represents the principle of an image capturing device of the integral photography type,
figure 2, also already described, represents a display device of the integral photography type,
figure 3 is a schematic drawing of one part of an embodiment of a display device according to the invention,
figures 4a to 4c are schematic drawings showing the principle of operation in space of the device shown on figure 3, and
figure 5 is a diagram showing the principle of operation in time of the device represented on figure 3.

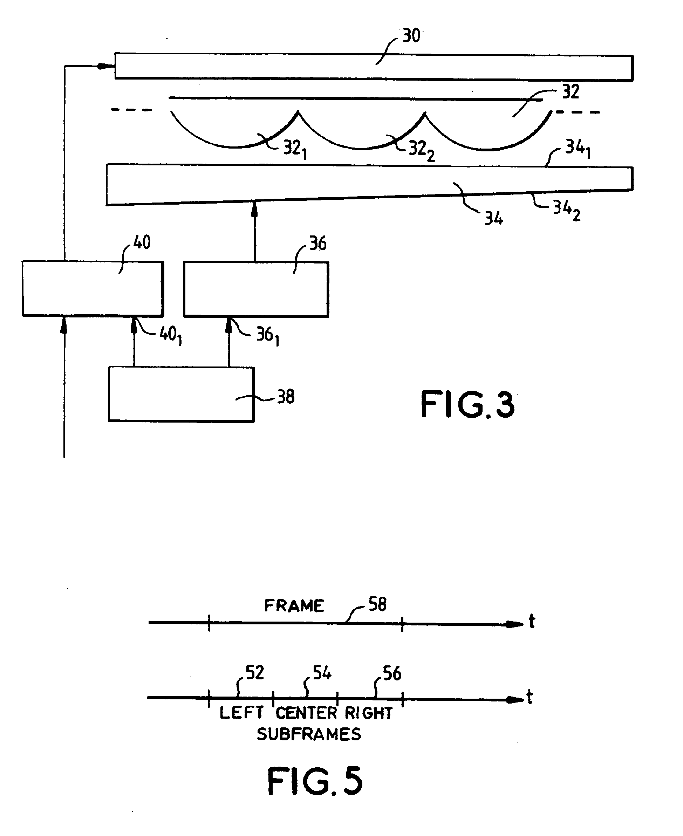

The display device represented on figure 3 comprises a LCD display panel 30 which is the same as LCD 14 of figure 2. Therefore it is not necessary to describe it again in detail. In front of this display 30 is installed an array 32 of lenses 32₁, 32₂, etc. This passive array 32 has the same function as array 16 on figure 2 with slits or holes a, b, c. This array 32 is for instance a flat sheet realized by moulding.

In front of this flat array 32 is installed, opposite to the display 30, a prism 34 having an angle between its two faces 34₁ et 34₂ which is variable under the control of a device 36 synchronized to the image displayed by panel 30. For this purpose a timing signal generator 38 provides a timing signal on an input 36₁ of the control device 36 and on an input 40₁ of a controller 40 driving the pixels on display 30.

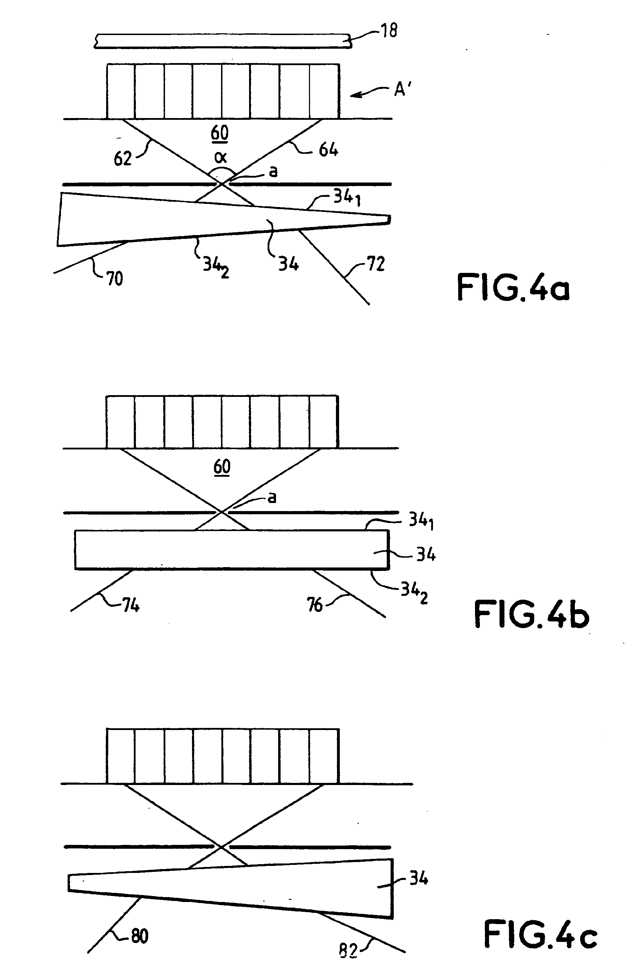

In order to simplify the drawing the operation of the display device is explained with drawings (figures 4a to 4c) similar to the drawing of figure 2, i.e. as if the passive array 32 was a slit array.

On these drawings is shown one subset of pixels A' and the corresponding lens or slit a.

The lens or slit sees the corresponding subset A' under an angle α, i.e. the light rays of source 18 form an angle α at slit a and the prism 34 is controlled in order to present 3 different angles during 3 different periods, or subframes, 52, 54, 56 (figure 5) of one image or frame period 58.

During the first period or subframe 52 the light rays in the angular space 60 delimited, on figure 4, by light rays 62 and 64, are deviated by prism 34 in such a way that, at the exit, they are comprised in an angular space which is deviated towards the left and which is delimited by light rays 70 and 72 represented in solid lines.

During the second subframe 54 the faces 34₁ and 34₂ of the controlled prism 34 are parallel (figure 4b) and therefore the angular space 60 is transformed in an angular space delimited by light rays 74 and 76.

During the third subframe 56 the prism 34 is controlled in such a way that it provides light rays in an angular space towards the right, i.e. on figure 4c, an angular space limited by light rays 80, 82 represented with mixed lines.

As can be seen on figures 4a to 4c, the total angular space delimited by light rays 70 and 82, which is formed of the 3 angular regions corresponding to the 3 different angles of the prism 34 is wider than the input angular space 60.

Therefore, in this example, in addition to increasing the spatial resolution, the display according to the invention provides a greater angle of view.

Although a controllable prism common to all subsets of pixels has been described, other embodiments are possible such as when vari-angle prism for each subset of pixels.

In the described embodiment the angular spaces 70, 72 ; 74, 76 ; and 80, 82 are overlapping. However, these spaces may be distinct and adjacent, but not overlapping.

In order to control the angle of a prism it is possible, as known per se, for instance to use 2 transparent sheets separated by a transparent liquid and piezoelectrically controlled.

The invention is also usable for image capturing device having a similar structure to the one described with figures 3-5.

## Claims

1. A three dimensional (3D) display apparatus implementing integral photography process, said apparatus comprising a passive array (32) of elements (a,b,c) chosen amongst points, holes, apertures or lens, a flat display (30) constituted of pixels array and a light source, the pixels array being divided in subarrays (A', B', C')of several, pixels, each subarray of pixels being associated with a predetermined element (a,b,c) of the passive array (32), the passive array (32), the pixels array (30) and the light source being associated so that the light rays emitted by the source cross the pixels array (30) and, then, the passive array (32)
**characterized in that** the apparatus further comprises controllable optical means (34) and a control device (36), the controllable means (34) being constituted by at least a transparent prism having an angle between its two faces which is variable under the control of said control device synchronized to the image displayed, said controllable optical means being associated to each subarray and the corresponding element (a,b,c) of the passive array, these optical controllable means receiving the light rays. (61, 64) coming from the pixels of said subarray and being controlled in order to output during n sub-frames dividing each frame period, the light rays (70, 72; 74,76; 80,82) coming from the pixels of said subarray in n different angular spaces, n >1 each angular space providing light rays coming from all the points of said subarray.

2. A 3D display apparatus according to claim 1 wherein the set of n angular spaces form an angular space which is wider than the angular space defined by the light rays from the element of the passive array and the corresponding set of pixels of each subarray.

3. A 3D display apparatus according to claim 1 or 2 wherein the subframes have equal durations.

4. A 3D display apparatus according to any of the previous claims wherein the optical controllable means comprise an optical element which is common to all the subarrays.

5. A 3D display apparatus according to any of claims 1-3 wherein the optical controllable means comprise a prism for each subarray and the corresponding element of the passive array.

6. A 3D display apparatus according to claim 1 wherein the number of subframes is equal to three and the angle between the faces of the prism take three values, two of them having opposite values and the faces being parallel during the remaining subframe.

7. A 3D display apparatus according to any of the previous claims wherein the flat surface display is a liquid crystal display.

8. A three dimensional (3D) image capturing apparatus implementing integral photography method to be used in relation with an apparatus according to any of the previous claims, said capturing apparatus comprising a passive array of elements chosen amongst points, slits, lenses or apertures and an array of photodetectors for capturing the image, this second array comprising a set of several subarrays, each subarray being associated with a corresponding element of the passive array, and each photodetector of each subarray being able to detect an information about a point of a 3D image, **characterized in that** said apparatus comprises controllable optical means and a control device, the controllable means being constituted by at least a transparent prism having an angle between its two faces which is variable under the control of a device synchronized to the image displayed, said controllable optical means being provided in front of the passive array for each subarray and the corresponding point of the passive array, these optical controllable means being controlled during n subframes dividing each frame period, the control being such that it divides the detected angular space into n subangular spaces n > 1, each subangular space at the input of the optical controllable means providing an output covering the whole angular space delimited by all the points of the subarray and the corresponding point of the passive array.

9. A 3D image capturing apparatus according to claim 8 wherein the set of n angular spaces form an angular space which is wider than the angular space defined by the light rays from the element of the passive array and the corresponding set of pixels of each subarray.

10. A 3D image capturing apparatus according to claim 8 or 9 wherein the subframes have equal durations.

11. A 3D image capturing apparatus according to any of claims 8-10 wherein the optical controllable means comprise a prism which is common to all the subarrays.

12. A 3D image capturing apparatus according to any of claims 8-10 wherein the optical controllable means comprise a prism for each subarray and the corresponding point of the passive array.

13. A 3D image capturing apparatus according to claim 8 wherein the number of subframes is equal to three and the angle between the faces of the prism take three values, two of them having opposite values and the faces being parallel during the remaining subframe.

## Patentansprüche

1. Dreidimensionale (3D-)Anzeigevorrichtung zur Durchführung des Verfahrens der integrierten Photographie, umfassend ein passives Feld (32) von aus Punkten, Löchern, Öffnungen oder Linsen ausgewählten Elementen (a, b, c), eine Flachbildanzeige (30), welche aus dem aus Bildpunkten bestehenden Feld und einer Lichtquelle besteht, wobei das aus Bildpunkten bestehende Feld in Unterfelder (A', B', C') aus mehreren Bildpunkten unterteilt ist und jedes aus Bildpunkten bestehende Unterfeld mit einem vorgegebenen Element (a, b, c) des passiven Feldes (32) zusammenwirkt und das passive Feld (32), das aus Bildpunkten bestehende Feld (30) und die Lichtquelle so zusammenwirken, dass die von der Quelle abgegebenen Lichtstrahlen das aus Bildpunkten bestehende Feld (30) und anschließend das passive Feld (32) kreuzen,
**dadurch gekennzeichnet, dass** die Vorrichtung ferner steuerbare optische Mittel (34) und eine Steuerungsvorrichtung (36) umfasst, wobei die steuerbaren Mittel (34) aus wenigstens einem durchlässigen Prisma mit einem Winkel zwischen seinen beiden Flächen bestehen, welcher durch mit dem angezeigten Bild synchronisierte Steuerung über die Steuerungsvorrichtung veränderbar ist, wobei die steuerbaren optischen Mittel mit jedem Unterfeld und dem entsprechenden Element (a, b, c) des passiven Feldes zusammenwirken, wobei diese steuerbaren optischen Mittel die von den Bildpunkten des Unterfeldes kommenden Lichtstrahlen (61, 64) empfangen, die zur Ausgabe während n Subframes, welche jede Framedauer unterteilen, gesteuert werden, wobei die Lichtstrahlen (70, 72; 74, 76; 80, 82) von den Bildpunkten des Unterfeldes in n unterschiedlichen winkelbereichen kommen, wobei n > 1 ist und jeder Winkelbereich von allen Punkten des Unterfeldes kommende Lichtstrahlen liefert.

2. 3D-Anzeigevorrichtung nach Anspruch 1, wobei die Menge von n Winkelbereichen einen Winkelbereich bildet, welcher breiter als der Winkelbereich ist, der durch die von dem Element des passiven Feldes und der entsprechenden Menge von Bildpunkten jedes Unterfeldes kommenden Lichtstrahlen definiert wird.

3. 3D-Anzeigevorrichtung nach Anspruch 1 oder 2, wobei die Subframes von gleicher Dauer sind.

4. 3D-Anzeigevorrichtung nach einem der vorhergehenden Ansprüche, wobei die steuerbaren optischen Mittel ein optisches Element umfassen, welches ein gemeinsames Element für alle Unterfelder ist.

5. 3D-Anzeigevorrichtung nach einem der Ansprüche 1 bis 3, wobei die steuerbaren optischen Mittel ein Prisma für jedes Unterfeld und das entsprechende Element des passiven Feldes umfassen.

6. 3D-Anzeigevorrichtung nach Anspruch 1, wobei die Anzahl der Subframes gleich drei ist und der Winkel zwischen den Flächen des Prismas drei Werte annimmt, wobei zwei davon entgegengesetzte Werte haben und die Flächen während des verbleibenden Subframes parallel zueinander angeordnet sind.

7. 3D-Anzeigevorrichtung nach einem der vorhergehenden Ansprüche, wobei es sich bei der Flachbildanzeige um eine Flüssigkristallanzeige handelt.

8. Dreidimensionale (3D-)Bilderfassungsvorrichtung zur Durchführung des Verfahrens der integrierten Photographie, zur Verwendung in Zusammenhang mit einer Vorrichtung nach einem der vorhergehenden Ansprüche, wobei die Erfassungsvorrichtung ein passives Feld von aus Punkten, Schlitzen, Linsen oder Öffnungen ausgewählten Elementen und ein Feld von Photodetektoren zum Erfassen des Bildes umfasst, wobei das zweite Feld eine Menge mehrerer Unterfelder umfasst, wobei jedes Unterfeld mit einem entsprechenden Element des passiven Feldes zusammenwirkt und wobei jeder Photodetektor jedes Unterfeldes in der Lage ist, eine Information über einen Punkt eines 3D-Bildes zu detektieren,
**dadurch gekennzeichnet, dass** die Vorrichtung steuerbare optische Mittel und eine Steuerungsvorrichtung umfasst, wobei die steuerbaren Mittel aus wenigstens einem durchlässigen Prisma mit einem Winkel zwischen seinen beiden Flächen bestehen, welcher durch mit dem angezeigten Bild synchronisierte Steuerung über eine Vorrichtung veränderbar ist, wobei die steuerbaren optischen Mittel vor dem passiven Feld für jedes Unterfeld und dem entsprechenden Punkt des passiven Feldes vorgesehen sind, wobei diese steuerbaren optischen Mittel während n Subframes gesteuert werden, welche jede Framedauer unterteilen, wobei die Steuerung derart erfolgt, dass **dadurch** der detektierte Winkelbereich in n Winkelteilbereiche mit n > 1 unterteilt wird, wobei jeder Winkelteilbereich am Eingang der steuerbaren optischen Mittel einen Ausgang liefert, welcher den gesamten Winkelbereich abdeckt, der durch alle Punkte des Unterfeldes und den entsprechenden Punkt des passiven Felds begrenzt ist.

9. 3D-Bilderfassungsvorrichtung nach Anspruch 8, wobei die Menge von n Winkelbereichen einen Winkelbereich bilden, welcher breiter als der Winkelbereich ist, der durch die von dem Element des passiven Feldes und der entsprechenden Menge von Bildpunkten jedes Unterfeldes kommenden Lichtstrahlen definiert wird.

10. 3D-Bilderfassungsvorrichtung nach Anspruch 8 oder 9, wobei die Subframes von gleicher Dauer sind.

11. 3D-Bilderfassungsvorrichtung nach einem der Ansprüche 8 bis 10, wobei die steuerbaren optischen Mittel ein Prisma umfassen, welches ein gemeinsames Prisma für alle Unterfelder ist.

12. 3D-Bilderfassungsvorrichtung nach einem der Ansprüche 8 bis 10, wobei die steuerbaren optischen Mittel ein Prisma für jedes Unterfeld und den entsprechenden Punkt des passiven Feldes umfassen.

13. 3D-Bilderfassungsvorrichtung nach Anspruch 8, wobei die Anzahl der Subframes gleich drei ist und der Winkel zwischen den Flächen des Prismas drei Werte annimmt, wobei zwei davon entgegengesetzte Werte haben und die Flächen während des verbleibenden Subframes parallel zueinander angeordnet sind.

## Revendications

1. Appareil d'affichage tridimensionnel (3D) implémentant un procédé de photographie intégrale, ledit appareil comprenant un ensemble passif (32) d'éléments (a, b, c) choisis parmi des points, trous, ouvertures ou lentilles, un affichage plat (30) constitué d'un ensemble de pixels et d'une source lumineuse, l'ensemble de pixels étant divisé en sous-ensembles (A', B', C') de plusieurs pixels, chaque sous-ensemble de pixels étant associé à un élément prédéterminé (a, b, c) de l'ensemble passif (32), l'ensemble passif (32), l'ensemble de pixels (30) et la source lumineuse étant associés de sorte que les rayons lumineux émis par la source croisent l'ensemble de pixels (30) et, ensuite, l'ensemble passif (32)
**caractérisé en ce que** l'appareil comprend en outre un moyen optique commandable (34) et un dispositif de commande (36), le moyen commandable (34) étant constitué d'au moins un prisme transparent comportant un angle entre ses deux faces, lequel est variable sous la commande dudit dispositif de commande synchronisé à l'image affichée, ledit moyen optique commandable étant associé à chaque sous-ensemble et à l'élément correspondant (a, b, c) de l'ensemble passif, ce moyen optique commandable recevant les rayons lumineux (61, 64) provenant des pixels dudit sous-ensemble et étant commandés afin d'être émis pendant n sous-trames divisant chaque période de trame, les rayons lumineux (70, 72 ; 74, 76 ; 80, 82) provenant des pixels dudit sous-ensemble dans n espaces angulaires différents, n > 1, chaque espace angulaire fournissant des rayons lumineux provenant de tous les points dudit sous-ensemble.

2. Appareil d'affichage 3D selon la revendication 1 où l'ensemble de n espaces angulaires forme un espace angulaire plus large que l'espace angulaire défini par les rayons lumineux à partir de l'élément de l'ensemble passif et de l'ensemble correspondant de pixels de chaque sous-ensemble.

3. Appareil d'affichage 3D selon la revendication 1 ou 2 où les sous-trames comportent des durées identiques.

4. Appareil d'affichage 3D selon l'une quelconque des revendications précédentes où le moyen optique commandable comprend un élément optique commun à tous les sous-ensembles.

5. Appareil d'affichage 3D selon l'une quelconque des revendications 1-3 où le moyen optique commandable comprend un prisme pour chaque sous-ensemble et l'élément correspondant de l'ensemble passif.

6. Appareil d'affichage 3D selon la revendication 1 où le nombre de sous-trames est égal à trois et l'angle entre les faces du prisme obtient trois valeurs, deux d'entre elles possédant des valeurs opposées et les faces étant parallèles pendant la sous-trame restante.

7. Appareil d'affichage 3D selon l'une quelconque des revendications précédendes où l'affichage à surface plane est un affichage à cristaux liquides.

8. Appareil de capture d'images tridimensionnel (3D) implémentant un procédé de photographie intégrale à utiliser en relation avec un appareil selon l'une quelconque des revendications précédentes, ledit appareil de capture comprenant un ensemble passif d'éléments choisis parmi des points, fentes, lentilles ou ouvertures et un ensemble de photodétecteurs pour capturer l'image, ce deuxième ensemble comprenant un ensemble de plusieurs sous-ensemble, chaque sous-ensemble étant associé à un élément correspondant de l'ensemble passif, et chaque photodétecteur de chaque sous-ensemble étant capable de détecter une information sur un point d'une image 3D, **caractérisé en ce que** ledit appareil comprend un moyen optique commandable et un dispositif de commande, le moyen commandable étant constitué d'au moins un prisme transparent possédant un angle entre ses deux faces, lequel est variable sous la commande d'un dispositif synchronisé à l'image affichée, ledit moyen optique commandable étant fourni en face de l'ensemble passif pour chaque sous-ensemble et le point correspondant de l'ensemble passif, ce moyen optique commandable étant commandé pendant n sous-trames divisant chaque période de trame, la commande étant telle qu'elle divise l'espace angulaire détecté en n espaces sous-angulaires n > 1, chaque espace sous-angulaire à l'entrée du moyen optique commandable fournissant une sortie couvrant l'espace angulaire global délimité par tous les points du sous-ensemble et le point correspondant de l'ensemble passif.

9. Appareil de capture d'images 3D selon la revendication 8 où l'ensemble de n espaces angulaires forme un espace angulaire plus large que l'espace angulaire défini par les rayons lumineux provenant de l'élément de l'ensemble passif et l'ensemble correspondant de pixels de chaque sous-ensemble.

10. Appareil de capture d'images 3D selon la revendication 8 ou 9 où les sous-trames comportent des durées identiques.

11. Appareil de capture d'images 3D selon l'une quelconque des revendications 8-10 où le moyen optique commandable comprend un prisme commun à tous les sous-ensembles.

12. Appareil de capture d'images 3D selon une quelconque des revendications 8-10 où le moyen optique commandable comprend un prisme pour chaque sous-ensemble et le point correspondant de l'ensemble passif.

13. Appareil de capture d'images 3D selon la revendication 8 où le nombre de sous-trames est égal à trois et l'angle entre les faces du prisme obtient trois valeurs, deux d'entre elles possédant des valeurs opposées et les faces étant parallèles pendant la sous-trame restante.
